# EUROPEAN PATENT SPECIFICATION

(11) **EP 2 920 714 B1**
(45) Date of publication and mention of the grant of the patent: **20.02.2019**
(21) Application number: 13802155.5
(22) Date of filing: 13.11.2013
(51) Int. Cl.: G06F 17/30

(54) **IMPROVING WEB SITES PERFORMANCE USING EDGE SERVERS IN FOG COMPUTING ARCHITECTURE**
VERBESSERUNG DER WEBSITELEISTUNG UNTER VERWENDUNG VON EDGE-SERVERN IN FOG-COMPUTING-ARCHITEKTUR
AMÉLIORATION DES PERFORMANCES DE SITES WEB AU MOYEN DE SERVEURS PÉRIPHÉRIQUES DANS UNE ARCHITECTURE INFORMATIQUE FOG

(30) Priority: 14.11.2012 US 201261726171 P; 29.05.2013 US 201313904327
(43) Date of publication of application: 23.09.2015
(73) Proprietor: Cisco Technology, Inc., San Jose, CA 95134-1706 (US)
(72) Inventor: ZHU, Jiang, Sunnyvale, CA 94086 (US); CHAN, Douglas, San Jose, CA 95134 (US); SURYANARAYANA PRABHU, Mythili, Mudlapur, San Jose, CA 95134 (US); NATARAJAN, Preethi, Los Gatos, CA 95032 (US); HU, Hao, San Jose, CA 95131 (US)
(74) Representative: Kazi, Ilya
(86) International application number: PCT/US2013/069776
(87) International publication number: WO 2014/078339

(56) References cited:
- EP-A1- 2 400 407
- EP-A2- 0 811 939
- US-A1- 2009 217 145
- SINGH P A ET AL: "PTC : proxies that transcode and cache in heterogeneous web client environments", WEB INFORMATION SYSTEMS ENGINEERING, 2002. WISE 2002. PROCEEDINGS OF T HE THIRD INTERNATIONAL CONFERENCE ON 12-14 DEC. 2002, PISCATAWAY, NJ, USA,IEEE, 12 December 2002 (2002-12-12), pages 11-20, XP010632776, ISBN: 978-0-7695-1766-7
- UGO ERRA ET AL: "Personalizable edge services for Web accessibility", UNIVERSAL ACCESS IN THE INFORMATION SOCIETY ; INTERNATIONAL JOURNAL, SPRINGER, BERLIN, DE, vol. 6, no. 3, 29 September 2007 (2007-09-29), pages 285-306, XP019546339, ISSN: 1615-5297, DOI: 10.1007/S10209-007-0091-Y

## Description

### TECHNICAL FIELD

The present disclosure generally relates to improving rendering of web pages by client devices accessing the web pages from a web server via a computing network, such as an Internet Protocol (IP) network.

### BACKGROUND

This section describes approaches that could be employed, but are not necessarily approaches that have been previously conceived or employed. Hence, unless explicitly specified otherwise, any approaches described in this section are not prior art to the claims in this application, and any approaches described in this section are not admitted to be prior art by inclusion in this section.

Attempts have been made to improve end-users' experiences in view web pages that are accessed over a wide area network such as the Internet. A user can experience substantial frustration in viewing a web page if the user must wait a relatively long time to view a requested web page. Although attempts have been made to improve the delivery of content to a user device using techniques such as prefetching, content acceleration, etc., most of the problems associated with a poor website experience is due to poor rendering performance and/or poor network conditions encountered by the client device receiving the web page and the associated web page contents. Poor rendering performance can cause blank screens, a browser resource to "lock up", or can cause the user device or operating system to "lock up" or crash.

Web site optimization has been attempted, where a web page is submitted to a server for optimization generally, without any consideration as to the conditions in which the web page is to be presented to the user. Moreover, no changes are made to the web page after optimization by the server; hence, the same web page is sent to every user, regardless of network conditions.

Document "PTC : proxies that transcode and cache in heterogeneous web client environments", by Singh P A et al, published on 12-12-2002 in Proceedings of the Third International Conference on Web Information Systems Engineering, discloses a proxy device to optimise web pages upon changes on network conditions.

### BRIEF DESCRIPTION OF THE DRAWINGS

Reference is made to the attached drawings, wherein elements having the same reference character designations represent like elements throughout and wherein:
Figure 1 illustrates an example system having an edge device configured for providing client-specific optimization of web page rendering for client devices, according to an example embodiment.
Figure 2 illustrates an example implementation of the edge device of Figure 1, according to an example embodiment.
Figure 3 illustrates a method summarizing example optimization operations executable by the edge device of Figure 1, according to an example embodiment.
Figure 4 illustrates example optimization operations executable by the edge device in the method of Figure 3, according to an example embodiment.
Figure 5 illustrates a first example method of client-specific optimization of web page rendering for client devices by the edge device of Figure 1, according to an example embodiment.
Figure 6 illustrates a second example method of client-specific optimization of web page rendering for client devices by the edge device of Figure 1, according to an example embodiment.
Figure 7 illustrates a third example method of client-specific optimization of web page rendering for client devices by the edge device of Figure 1, according to an example embodiment.

### DESCRIPTION OF EXAMPLE EMBODIMENTS OVERVIEW

In one embodiment, a method comprises receiving, by an edge device in an edge network, a request from a client device for a web page provided by a web server via a wide area network, the edge network providing an access network for the client device to reach the wide area network; detecting, by the edge device, a prescribed condition affecting rendering performance of the web page by the client device; and the edge device dynamically optimizing the web page into an optimized web page for optimized rendering of the web page by the client device.

### DETAILED DESCRIPTION

Particular embodiments can automatically and dynamically optimize a web page rendering by a client device, based on detecting prescribed conditions affecting rendering performance of the web page by the client device. For example, particular embodiments enable an edge server (executed within a machine referred to herein as an "edge device") to detect the prescribed conditions based on obtaining information about the client device and/or about network conditions that are available only near the access network (i.e., edge network) utilized by the client device. The particular embodiments can dynamically optimize the web page rendering for the client device based on modifying the web page, including web page elements that are within the web page, based on the detected prescribed conditions.

Moreover, the particular embodiments enable the edge device to continually monitor the client device, network conditions including network connection quality with the client device and/or network connection quality with a web server(s) providing the web page content, rendering performance of the client device, etc., in order to determine the most appropriate optimization for the client device. Further, the edge device can receive "feedback" from the client device in terms of rendering speed by the client device, enabling the edge device to perform heuristic multivariable optimizations that identify the most appropriate optimization operations to be executed, in order to provide an optimized web page for optimized rendering of the web page by the client device. Consequently, the heuristic multivariable optimizations can include an identification of optimizations that should not be performed, for example due to determining that the associated introduced processing delay would exceed the rendering performance of the web page by the client device, or that a prescribed optimization operation would further deteriorate rendering performance of the web page by the client device.

Hence, the particular embodiments provide a localized optimization for rendering of web pages relative to a physical location of the client device, while ensuring that the localized optimization does not introduce any delays to the rendering of the web page.

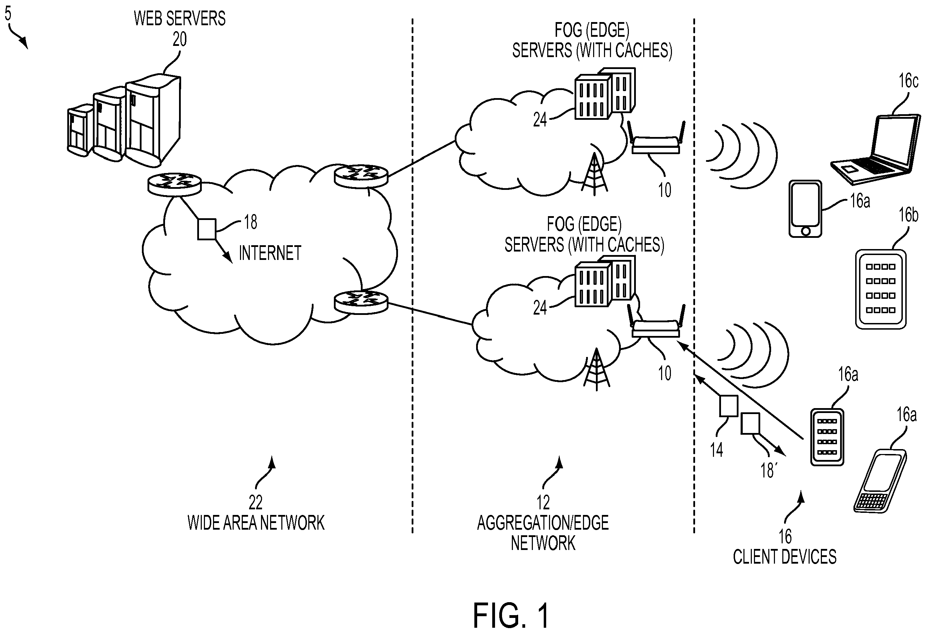

Figure 1 illustrates an example system 5 having an edge device 10 configured for providing client-specific optimization of web page rendering for client devices, according to an example embodiment. The apparatus (i.e., machine, edge device) 10 can be implemented in an edge network 12 and can be configured to receive a request 14 from a client device 16 for a web page 18 provided by a web server device (i.e., machine) 20 via a wide area network 22. The edge network 12 provides an access network for one or more of the client devices 16 to reach the wide area network 22.

According to an example embodiment, the edge network 12 including the edge device can be implemented as a "fog computing network architecture", or "fog computing". The fog computing network architecture 12 is a highly virtualized platform that provides compute, storage, and networking services between end devices 16 and cloud computing data centers, for example cloud computing data centers 12 located via a wide area network. For example, the fog computing network architecture 12 can include distributed storage devices 24 for storing cached web content, stored media used for streaming media for content delivery systems, etc. The distributed storage devices 24 can be implemented as virtualized storage servers within physical machines capable of performing multiple virtualized services, for example virtualized computing, storage, and networking services. The term "Fog" refers to the virtualized compute, storage, and network services normally associated with cloud computing, except that the fog computing network architecture 12 is closer to the client devices 16, analogous to fog being a cloud close to the ground. The edge device 10 can be implemented as a wireless router at a customer premises, a Lightweight Access Point (LWAPP) controller, a layer 4 to 7 switch, a service provider edge switch, a device in the commercially available Cisco Content Delivery System (CDS) by Cisco Systems, San Jose, California, etc.

The deployment of fog computing in the edge network 12 also enables the edge device 10 to obtain real-time connection and performance information from the client device 16 in support of the wireless access by the client device 16 using wired or wireless data network protocols, including layer 2 Media Access Control (MAC) address and link data, Internet Protocol (IP) address and performance data, session identifier that uniquely identifies the client device to a wireless access point, etc. The deployment of fog computing in the edge network 12 also enables the edge device 10 (or other associated edge devices in the edge network 12) to monitor changes in data connections, for example due to roaming of the client device 16, changing physical layer transceivers by the client device 16, etc. The edge device 10 also can request information from the client device regarding performance of the client device 16, including the time to render a web page by the client device 16 (HTTP page load time), described below.

In one example, consider a wireless client device 16c that is situated near an access point (AP), and that the edge device 10 determines that there is no network congestion. Consider also that the edge device 10 determines that this client device 16c is a PC/laptop that has a large display screen. Since there is enough bandwidth to support transferring the web page 18 and all its objects in a timely fashion, the processor circuit 28 in the edge device 10 can conclude that there is no need to reduce or compress the sizes of the graphic files that typically lead to lower viewing resolution. In contrast, if the processor circuit 28 in the edge device 10 recognizes the client device 16 as a mobile device 16a with a small display screen (e.g., a smart telephone) that cannot display high resolution graphics in a satisfactory manner for the user (e.g., only a small portion of the graphics can be displayed at any time), the edge device 10 can reduce the viewing resolution.

Now consider the wireless PC/laptop device 16c has roamed to an area with poor reception, leading to a decrease in data rate with the access point. Consider also that this information is sent to the edge device 10 serving the users. At this point, in order to timely deliver the webpage and its objects to the user, the edge device 10 can choose to send graphics of a lower resolution to this client device 16c. Hence, the edge device 10 can eliminate the user's wait for graphics to be downloaded slowly when network conditions are unfavorable (e.g., network congestion or poor wireless reception.

Hence, the edge device 10 can detect all Quality of Service (QoS) based conditions associated with the client device 16, including improved or deteriorating data network connections, network-based traffic congestion, etc. The edge device 10 also can detect similar network-based QoS conditions associated with receiving HTML web pages and associated web objects from the web server 20 (or multiple web servers providing distinct objects of a web page). Hence, all of the network based conditions detected by the edge device 10 can be used to provide a customized optimized web page 18' for a specific client device 16.

Although the client devices can include wired or wireless client devices 16 (e.g., smart phones 16a, wireless smart tablets 16b, wireless laptop computers 16c, wired computers, etc.), the edge network 12 also can provide fog computing services for other sensor-based devices, for example embedded systems and sensors, sensor-aware vehicles, sensor-aware robots, other sensor-aware machines referred to generally as "Internet of Things", etc.

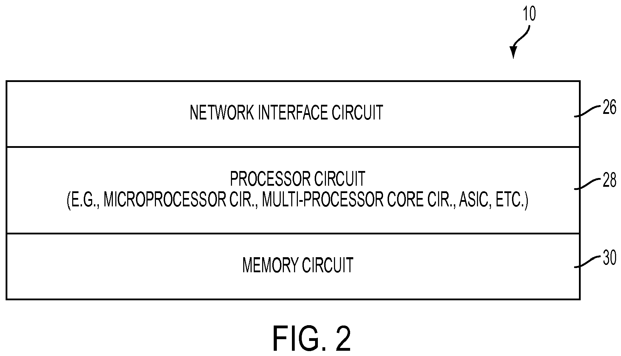

Figure 2 illustrates an example implementation of the edge device 10 of Figure 1, according to an example embodiment. Each edge device 10 in the edge network 12 can include a network interface circuit 26, a processor circuit 28, and a non-transitory tangible memory circuit 30. The processor circuit 28 in the edge device 10 is configured for detecting a prescribed condition that can affect rendering performance of the web page 18 by the client device 16, for example either enhance the rendering performance by the client device 16 or degrade the rendering performance by the client device. The prescribed condition can include at least any one of network congestion associated with the edge network 12, client device type (e.g., wired desktop computer, wired or wireless laptop computer, wireless mobile phone or wireless tablet with thin client browser, etc.), or client device rendering performance (e.g., determining whether the client device is suffering degraded performance that adversely affects web page rendering). The memory circuit 30 can be configured for storing (e.g., caching) a web page 18 previously requested by the client device 16 (e.g., 16a), or by another client device (e.g., 16b).

As described in further detail below, the processor circuit 28 in the edge device 10 can dynamically optimize the web page 18 into an optimized web page 18' for optimized rendering of the web page by the client device 16. Examples of dynamic optimization by the edge device 10 can include at least one of: combining multiple stylesheets required by the web page into a single stylesheet file, and transmitting the single stylesheet file in place of the multiple stylesheets to the client device; combining multiple style sheet images required by the web page into a single image, and transmitting the single image in place of the multiple style sheet images to the client device; assigning an expiration header to one or more embedded objects in the web page to reduce requests for the embedded objects by the client device; or reducing size of web objects in the web page. Web objects refer to objects on a web page, in particular graphic files or graphic objects, although other web objects may reside on a web page other than graphic files or graphic objects. In addition web pages and/or web objects modified by the edge device 10 can be cached (or stored) in the memory circuit of the edge device.

The edge device 10 and the edge network 12 can be implemented using different forms, for example a wireless access network including wireless access points, where the edge device 10 can be implemented as a wired controller that controls the wireless access points according to a prescribed data link layer protocol such as Lightweight Access Point Protocol (LWAPP).

Any of the disclosed circuits of the apparatus 10 (including the processor circuit, the memory circuit, and the device interface circuit (and their associated components) can be implemented in multiple forms. Example implementations of the disclosed circuits include hardware logic that is implemented in a logic array such as a programmable logic array (PLA), a field programmable gate array (FPGA), or by mask programming of integrated circuits such as an application-specific integrated circuit (ASIC). Any of these circuits also can be implemented using a software-based executable resource that is executed by a corresponding internal processor circuit such as a microprocessor circuit (not shown) and implemented using one or more integrated circuits, where execution of executable code stored in an internal memory circuit (e.g., within the memory circuit) causes the integrated circuit(s) implementing the processor circuit to store application state variables in processor memory, creating an executable application resource (e.g., an application instance) that performs the operations of the circuit as described herein. Hence, use of the term "circuit" in this specification refers to both a hardware-based circuit implemented using one or more integrated circuits and that includes logic for performing the described operations, or a software-based circuit that includes a processor circuit (implemented using one or more integrated circuits), the processor circuit including a reserved portion of processor memory for storage of application state data and application variables that are modified by execution of the executable code by a processor circuit. The memory circuit can be implemented, for example, using a non-volatile memory such as a programmable read only memory (PROM) or an EPROM, and/or a volatile memory such as a DRAM, etc.

Further, any reference to "outputting a message" or "outputting a packet" (or the like) can be implemented based on creating the message/packet in the form of a data structure and storing that data structure in a tangible memory medium in the disclosed apparatus (e.g., in a transmit buffer). Any reference to "outputting a message" or "outputting a packet" (or the like) also can include electrically transmitting (e.g., via wired electric current or wireless electric field, as appropriate) the message/packet stored in the tangible memory medium to another network node via a communications medium (e.g., a wired or wireless link, as appropriate) (optical transmission also can be used, as appropriate). Similarly, any reference to "receiving a message" or "receiving a packet" (or the like) can be implemented based on the disclosed apparatus detecting the electrical (or optical) transmission of the message/packet on the communications medium, and storing the detected transmission as a data structure in a tangible memory medium in the disclosed apparatus (e.g., in a receive buffer). Also note that the memory circuit can be implemented dynamically by the processor circuit, for example based on memory address assignment and partitioning executed by the processor circuit.

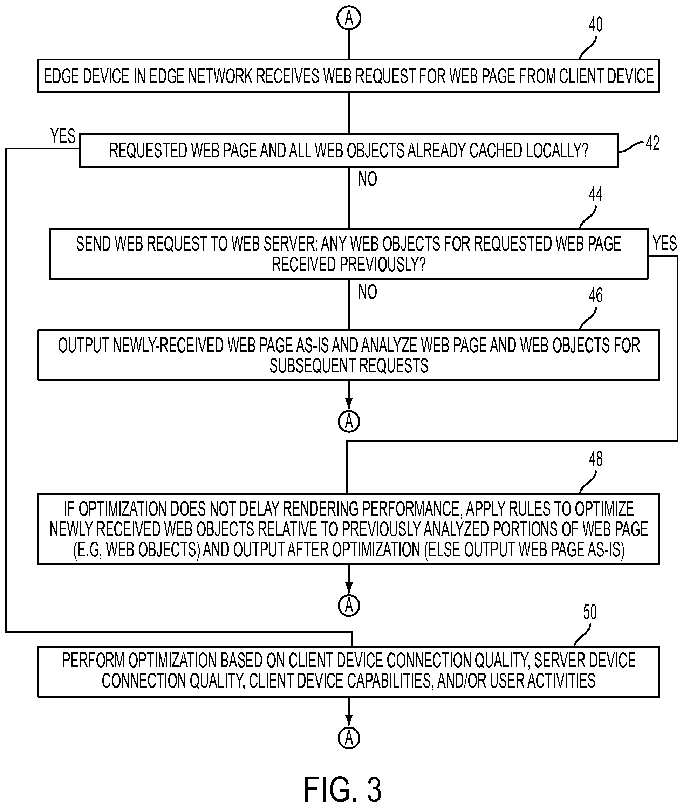

Figure 3 illustrates a method summarizing example optimization operations executable by the edge device of Figure 1, according to an example embodiment. The operations described with respect to any of the Figures 1-7 can be implemented as machine executable code stored on a computer or machine readable non-transitory tangible storage medium (e.g., floppy disk, hard disk, ROM, EPROM, EEPROM, nonvolatile RAM, CD-ROM, etc.) that are completed based on execution of the code by the processor circuit implemented using one or more integrated circuits; the operations described herein also can be implemented as executable logic that is encoded in one or more non-transitory tangible media for execution (e.g., programmable logic arrays or devices, field programmable gate arrays, programmable array logic, application specific integrated circuits, etc.) by a machine or device.

Referring to Figure 3, the network interface circuit 26 of the edge device 10 is configured for receiving in operation 40 a web request 14 from the client device 16 for a web page 18 provided by one or more web servers 20 via the wide-area network 22. As described previously with respect to Figure 1, the edge device 10 is part of an edge network 12 that provides an access network for the client device 16 to reach the wide-area network 22. The processor circuit 28 of the edge device 10 determines in operation 42 whether the requested web page 18 and all of the associated web objects are already cached locally within the edge network 12: in one embodiment, the cached web page can be stored in the corresponding memory circuit 30; in another embodiment, the cached web page can be stored in distributed storage devices 24 associated with the fog computing architecture 12.

If in operation 42 the processor circuit 28 determines that the requested web page 18 is not cached locally, the processor circuit 28 can send the web request to the web server 20 in operation 44, for example according to HTTP protocol via the wide-area network 22. The processor circuit 28 of the edge device 10 also can act as a proxy on behalf of the client device 16 and retrieve web objects from multiple destinations specified either in the initial web request 14 or in the web page 18 supplied by the web server 20. The processor circuit 20 also can determine in operation 44 whether any web objects for the requested web page were previously received and stored in a local cache (e.g., the memory circuit 30 or the storage node 24). The term "web object" refers to any component of the web page 18, including a web page image (e.g., BMP, JPG, JPEG, PNG, TIF, etc.), a media file (e.g., MP3, MP4, etc.), a Javascript element, a cascading style sheet (CSS) element, etc.

If in operation 44 the processor circuit 28 determines that no web objects were previously received for the requested web page 18, the processor circuit 28 can cause the newly received web page 18 to be output "as is" (i.e., without any modification) to the client device 16 in operation 46 if the processor circuit 28 determines that there is insufficient information to determine how to optimize the web page 18 for the client device 16, described in further detail below. The processor circuit 20 also caches the newly-received web page 18 and the associated web objects locally (e.g., within the memory circuit 30 and/or the storage devices 24), and analyzes the received web page 18 and associated web objects for possible optimization in response to subsequent relevant requests.

Assuming in operation 44 that the processor circuit 28 determines that at least some of the web objects within the requested web page 18 were previously received and cached within the edge network 12, and if the processor circuit 28 determines that optimization will not delay the overall rendering performance of the browser in the client device 16 as experienced by the user of the client device, the processor circuit 28 in operation 48 can execute a multivariable optimization based on applying the optimization rules (described below) in order to optimize the newly received web objects relative to the previously analyzed portions of the web objects analyzed in operation 46. Hence, the processor circuit 28 can generate and output to the client device 18 an optimized web page 18' for optimized rendering by the client device 16, at least based on optimization of previously cached web objects associated with the newly received web page 18. The processor circuit 28 also can cache the web page and perform analysis of the one web page 18 for subsequent requests. As described previously, if the processor circuit 28 determines that optimization would delay rendering performance, the processor circuit 20 also can decide to output the web page 18 "as is".

Referring to operation 42 of Figure 3, if the processor circuit 28 determines from the web request 14 that the requested web page and all the associated web objects are already cached locally (e.g., within the memory circuit 30 and/or the storage devices 24), the processor circuit 28 in operation 50 can execute the heuristic multivariable optimization based on locally available parameters, for example client device connection quality, web server device connection quality (e.g., number of hops to the web server 20, performance throughput of the web server 20, etc.), client device capabilities (e.g., user agent identifier, user device type identifier including browser type and version, processor type and version, etc.). As described below, the processor circuit 28 also can perform optimization based on user activities, for example based on the user accessing the same or similar websites repeatedly.

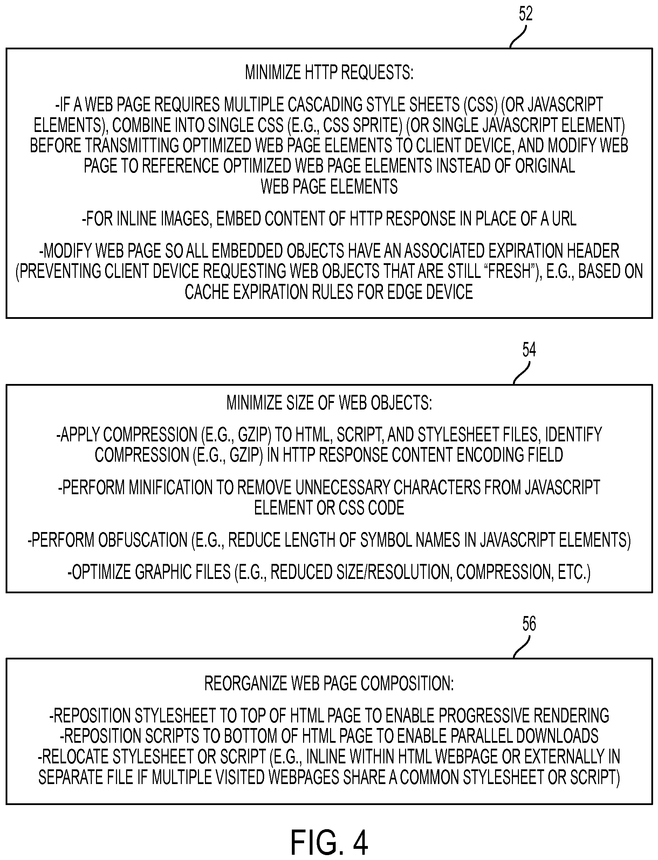

Figure 4 illustrates example optimization operations executable by the processor circuit 28 of the edge device 10 in performing the optimization operations of Figure 3, according to an example embodiment. In particular, the processor circuit 28, as part of its multivariable optimization, determines from the current network-based conditions, web page attributes, and client device attributes, whether certain optimization operations will result in improved rendering performance. Example optimization operations that can be performed by the processor circuit 28 can include minimizing hypertext transport protocol (HTTP) requests 52, reducing or minimizing the size of web objects within the web page 18 (operation 54), and/or reorganizing web page composition (operation 56).

The minimizing of HTTP requests (operation 52) is for reducing the number of traversals of routes and responses via the wide-area network 22, since a web page having a larger number of HTTP requests will require more network round trips, resulting in a slower rendering or execution of a web page by a client device 16. Typically a web page can initiate additional HTTP requests for images, stylesheets such as cascading style sheets (CSS), and/or script files such as JavaScript elements.

Hence, if a web page 18 requires multiple stylesheets, one example optimization that can be applied by the processor circuit 28 is to combine the multiple style sheets into one style sheet file before transmitting the style sheet file to the client device 16. As described below, the single style sheet file can either be embedded within the optimized web page 18' or supplied as a separate file that is distinct from the optimized web page 18'. Similarly, another optimization that can be applied by the processor circuit 28 is to combine multiple JavaScript elements into a single JavaScript element that is either embedded (in-line) into the optimized web page 18', or sent as a separate file that is distinct from the optimized web page 18'. In cases where the web page elements (e.g., CSS or JavaScript element) are sent as separate files, the optimized web page 18' generated by the processor circuit 28 can include a reference to the separate file. Hence, storage and caching of the separate file within the client device 16 can enable the client device 16 to utilize the same cached file (containing CSS or JavaScript elements) for multiple web pages utilizing the same CSS or JavaScript elements.

Another example of minimizing HTTP requests in operation 52 can include embedding the content of an HTTP response (e.g., an in-line image) in place of a URL existing in the original web page 18. Another example of minimizing HTTP requests can include modifying the web page 18 so that all embedded objects have an associated expiration header that prevents the client browser executed in the client device 16 from prematurely requesting web objects that are still "fresh" for the associated web page; in one embodiment, the expiration time can be set according to cache expiration rules set within the edge device 10 and/or the storage nodes 24. Another example of minimizing HTTP requests can include replacing any redirect HTTP links within the web page 18 with the original content and/or the original full uniform resource identifier/locator (URI/URL).

The processor circuit 28 within the edge device 10 also can reduce or minimize the size of web objects (operation 54), for example based on network connection quality, device type, etc., where a lower resolution image may be sent to an intelligent cell phone 16a, and a higher resolution image may be sent to an intelligent tablet 16b or a laptop display 16c. For example, the processor circuit 28 can apply compression (e.g., gzip) to all HTML, script, and stylesheet files to be sent to the client device 16, and identify the compression method within the HTTP response content encoding field. The processor circuit 28 also can perform minification to remove unnecessary characters (e.g., un-executable comments, space characters, "white space" etc.) from JavaScript elements or CSS codes. The processor circuit 20 also can perform obfuscation, for example reducing the length of symbol names within JavaScript elements, also referred to as "munge". The processor circuit 28 also can optimize graphic files (e.g., BMP, JPG, PNG, etc.), for example based on performing a reduced size/resolution operations, compression, or moving metadata from the graphic files, optimizing GIF animations, generating progressive JPEG images, etc.

The processor circuit 28 within the edge device 10 also can reorganize web page composition (operation 56) to change the order of execution by a client device. In particular, the location of various components within a web page 18 can significantly affect the speed at which the web page 18 is executed by the browser in the client device 16 (i.e., the time it takes to render the web page 18). For example, the processor circuit 28 can reposition stylesheets (e.g., CSS) to the top of an HTML web page 18 to enable progressive rendering by the browser executed by the client device 16. The processor circuit 28 also can reposition scripts at the bottom of the HTML web page 18' to enable parallel downloads to be executed by the browser executed in the client device 16. The processor circuit 28 also can locate the JavaScript or stylesheet elements either in-line within the HTML web page 18', or externally within a separate file referenced by the modified web page 18', for example if multiple visited web pages share a common style sheet or script.

An optimization rule often has parameters that represent various tradeoffs. Knowledge of the user's browsing behavior while using the client device 16 can help dynamically select the best parameters. An example of this is the processor circuit 28 deciding whether to move Javascript and CSS elements inline or external to the web page 18'. As discussed above, the advantage of an inline JS or CSS element is that HTTP requests are minimized; if stored in external files, however, the browser executed by the client device 16 can cache and reuse the JS or CSS elements if another webpage contains the same JS and CSS. In particular, a website domain hosting multiple web pages typically uses a unifying theme or style, such that webpages from the website domain usually share the common CSS and JS elements.

Hence, if during a session the page views of an user for the same website is high and the website has common JS and CSS across its webpages, then performance can be improved by moving the common JS and CSS elements to the external file for caching by the browser in the client device 16. One issue in determining what websites a user is visiting, however, is how to identify each user. One well known method employed by websites is to track each user by a cookie; however cookies are almost never present for static pages in order to conserve the size of the HTTP request. Hence, it is not feasible to rely on cookies to track users who request static pages.

Another method for tracking user is for a webserver to track a client device 16 via its IP address. However, if the client device 16 belongs to a network that is behind a firewall, then the user will have the same IP address as any other users from this network requesting the same page. Thus, this tracking method in conventional systems would be unreliable.

According to an example embodiment, use of the edge server 10 in the fog architecture 12 provides the advantage that the edge device 10 belongs to the same network as the client devices 16. Hence, the edge device 10 can obtain knowledge of each client device 16 based on the corresponding (unique) MAC addresses, and/or can observe the behaviors of each corresponding client device 16 via its corresponding (unique) local IP addresses (or corresponding session identifier as established by the associated wireless access point providing a wireless connection to the client device 16).

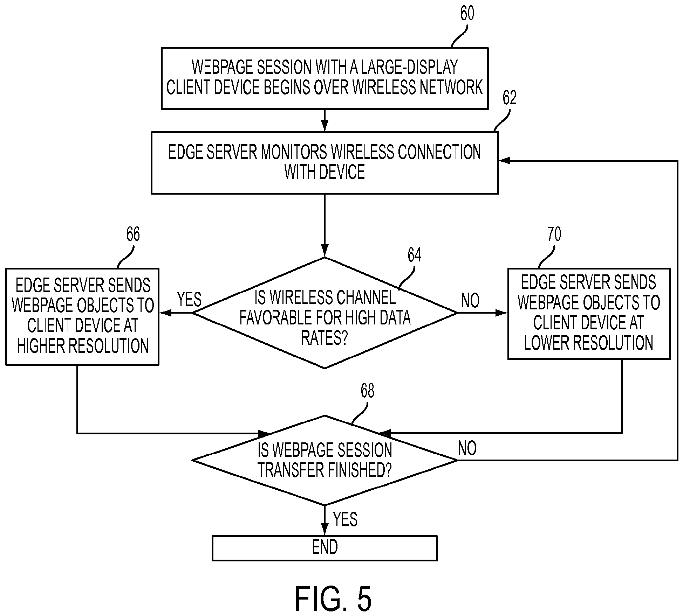

Figure 5 illustrates an example method of client-specific optimization of web page rendering for client devices by the edge device 10 of Figure 1, according to an example embodiment. Figure 5 illustrates an example where the edge device 10 can monitor in operation 60 a web page session with a large-display client device 16c utilizing a wireless connection to the edge device 10, for example a laptop computer or a desktop computer having a wireless connection. The edge network device 10 can monitor in operation 62 a wireless connection with the client device 16, for example relying on physical layer (layer 1), data link layer (layer 2), or network layer (layer 3) parameters describing the quality of the data link; alternatively, the network interface circuit 26 of the edge device 10 and the corresponding network interface circuit in the client device 16 can exchange parameters describing the network length quality; other higher layer parameters can be used, for example round-trip delay parameters, etc. If the processor circuit 28 in operation 64 determines that the wireless data channel utilized by the client device 16 is favorable for high data rates, the processor circuit 28 as part of the optimization of the web page 18 can send the web page objects to the client device 16 at the higher resolution in operation 66, while continuing to monitor the wireless channel in operation 68 until the web page session transfer is completed.

If in operation 64 the processor circuit 28 determines that the wireless data channel utilized by the client device 16 is not favorable for high data rates, the processor circuit 28 can perform optimization in operation 70 based on sending the web page objects to the client device 16 at the lower resolution. As apparent from the foregoing, the processor circuit 28 can dynamically change the resolution of the web page objects in response to dynamically detecting changes in the wireless data channel characteristics in operation 64.

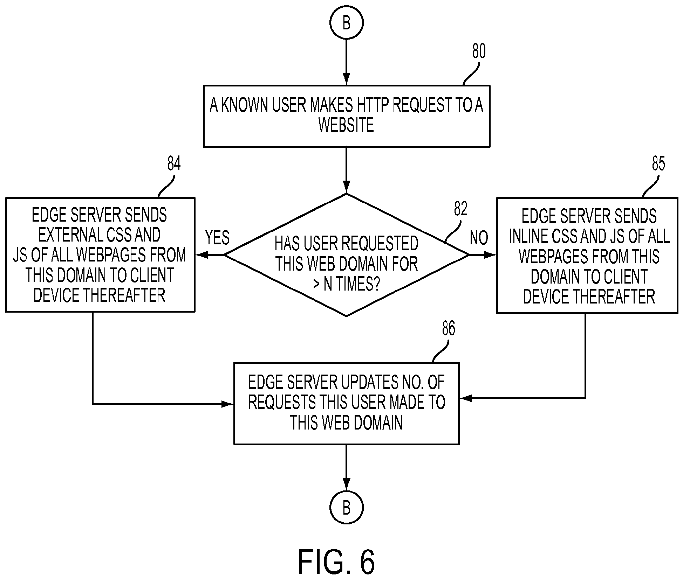

Figure 6 illustrates an example method of client-specific optimization of web page rendering for client devices by the edge device 10 of Figure 1, according to an example embodiment. As described previously, the processor circuit 28 of the the edge device 10, as part of the fog architecture 12, can keep track of each user's website requests 14, based on identifying in operation 80 the user via the corresponding local IP address or MAC address of the client device 16. Hence, if in operation 82 a tracked user requests more than N number of webpages from the same website, where N is a tunable parameter (e.g., N=2), then the processor circuit 28 can recognize that the user is exploring webpages under a common website domain and can benefit if the user's browser can cache the common CSS or JS files. Hence, the processor circuit 28 in operation 84 can determine that the web pages from an identified website domain can have their CSS or JS sent externally for the identified user, and in response send the CSS elements and JavaScript elements for all web pages from the identified domain to the client device 16 in a separate data file that is referenced in each optimized web page 18'. If in operation 82 the user has not requested a sufficient number of web pages from the identified web domain, the processor circuit 28 of the edge device 10 can send the CSS and JavaScript elements as in line elements of the web pages for the domain in operation 85, and update in operation 86 the number of requests 14 made to the identified web domain.

An additional advantage of the fog architecture 12 is that the edge server 10 can determine the rendering speed by a browser executed by a client device 16. The processor circuit 28 can embed code snippets in an HTML or script file such that when the browser has rendered to that spot (i.e., location) of the file, it sends a feedback message to the webserver. By strategically placing these code snippets, the processor circuit 28 in the edge device can to measure the speed at which a user's browser loads the web page 18 or 18'.

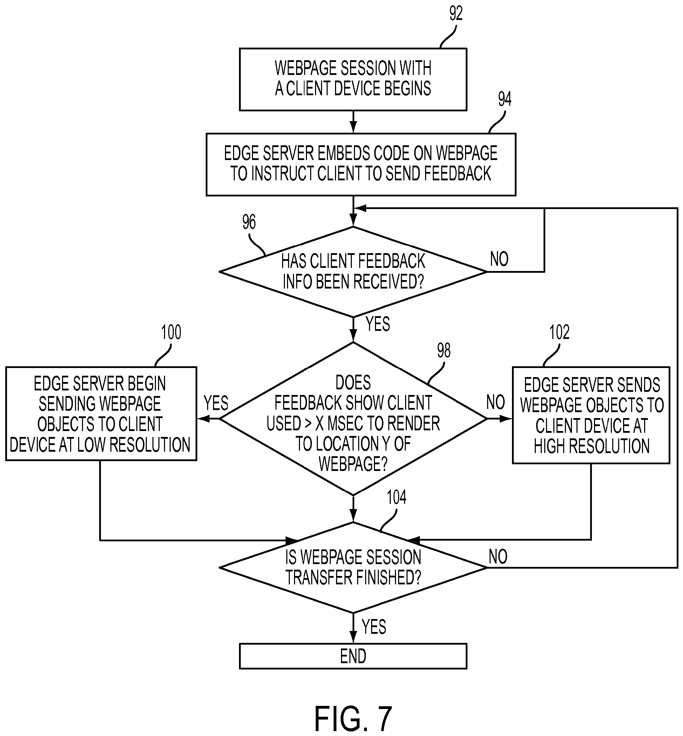

Figure 7 illustrates an example method of the edge device 10 optimizing the web page 18 based on feedback from the client device 16, according to an example embodiment. The receipt of accurate feedback of a user's webpage rendering speed enables the processor circuit 28 to customize the optimization for each user even more dynamically and fine tune the result achieved via the above rules. For example, assume in operation 92 that the edge device 10 has determined a user has a large screen device and has enough network bandwidth for larger and higher resolution graphic files. As discussed previously, the edge device 10 can send such web pages and expect the user's browser to render them in a timely fashion. In addition, the edge device 10 can embed code into the webpage in operation 94 to measure the user's browser rendering speed. In particular, a check is put on components that require more processing, e.g., scripts or large graphic files. The edge device can monitor for the feedback information in operation 96.

If in operation 98 the feedback returned from the client device 16 indicates the browser is displaying or executing these components sluggishly (e.g., execution time is beyond a prescribed or heuristically-determined time interval), then this may indicate the user's device may be low on computing power or other resources (e.g., if the user has many applications opened, thus using up the device's memory and computing resources), or if the user's current applications executed by the client device 16 are more demanding on the processing resources on the client device 16. In response to the feedback, in subsequent webpage requests, despite the fact that there is enough bandwidth in the network, the processor circuit 28 in the client device 16 can select to send in operation 100 a smaller lower resolution graphic file, thus minimizing the computation costs on the client device 16 and expediting the webpage's rendering.

The edge device 10 can continue to monitor in operation 104 feedback messages from the client device 16 and determine if the browser's rendering speed is improving, at which time the edge device 10 can progress to sending larger higher resolution graphic files again in operation 102.

According to the example embodiments, an edge device in an edge network 12 can optimize the rendering of web pages by client devices, based on determining heuristic multivariable optimizations using client device parameters and edge network parameters that are detectable only in the edge network. Optimization also can be dynamically updated and adapted based on the user conditions, for example network status and computing load of the client device, for enhanced optimizations based on the network edge specific knowledge. Hence, the edge device 10 can dynamically optimize the rendering of a web page by client device using parameters that are not available by web servers or content data networks.

## Claims

1. A method comprising:
receiving, by an edge device (10) in an edge network (12), a request (14) from a client device (16) for a web page (18) provided by a web server (20) via a wide area network, the edge network providing an access network connection for the client device to reach the wide area network;
receiving, by the edge device, the web page via the wide area network and the edge network;
inserting, by the edge device into the web page prior to transfer to the client device, executable code for obtaining feedback measuring a rendering performance of at least a first portion of the web page by the client device;
receiving, by the edge device, the feedback from the client device that measures the rendering performance of at least the first portion of the web page by the client device;
detecting, by the edge device from the feedback, a changed condition indicating a deteriorated execution time affecting rendering performance of the at least the first portion of the web page by the client device, wherein the deteriorated execution time is independent of bandwidth in the edge network available to the client device; and
the edge device (10) dynamically optimizing the web page based on changing at least the first portion of the web page into an optimized web page in response to the changed condition detected from the feedback, for optimized rendering of the web page by the client device.

2. The method of claim 1, wherein the dynamically optimizing is based on improving the rendering performance using the optimized rendering, the method further including selectively avoiding optimization operations that introduce a processing delay exceeding the rendering performance of the web page by the client device (16).

3. The method of claim 1, wherein the changed condition degrades rendering performance and includes at least anyone of a detected network connection quality associated with the edge network (12) and at least one of the web server (20) or the client device (16), a detected client device type, or a detected client device rendering performance.

4. The method of claim 1, wherein the changed condition includes one of a first connection type that reduces a detected network connection quality and degrades the rendering performance, or a second connection type that improves the detected network connection quality and improves the rendering performance.

5. The method of claim 4, wherein the dynamically optimizing includes one of optimizing the web page to improve the rendering performance in response to detecting the first connection type, or optimizing the web page to provide enhanced web page elements in response to detecting the second connection type.

6. The method of claim 1, wherein the dynamically optimizing includes at least one of:
combining multiple style sheets required by the web page into a single style sheet file, and transmitting the single style sheet file in place of the multiple style sheets to the client device (16);
combining multiple style sheet images required by the web page into a single image, and transmitting the single image in place of the multiple style sheet images to the client device;
assigning an expiration header to one or more embedded objects in the web page to reduce requests for the embedded objects by the client device; or
reducing size of web objects in the web page.

7. The method of claim 6, wherein the dynamically optimizing includes moving web elements from the web page into a file that is distinct from the optimized web page, the optimized web page not containing the moved web elements and requiring the client device (16) to access the file for rendering of the optimized web page.

8. The method of claim 1, wherein the dynamically optimizing includes dynamically optimizing a locally-cached copy of the web page having been requested from the web server (20) by a second client device (16) via the edge device (10).

9. An apparatus comprising:
a network interface circuit configured for receiving a request from a client device, the request being for a web page provided by a web server (20) via a wide area network, the apparatus being configured for providing access to the client device to the wide area network via an edge network (12) providing an access network connection for the client device to reach the wide area network, the network interface circuit being further configured for receiving the web page via the wide area network and the edge network; and
a processor circuit configured for:
inserting, into the web page prior to transfer to the client device, executable code for obtaining feedback measuring a rendering performance of at least a first portion of the web page by the client device,
receiving the feedback from the client device that measures the rendering performance of at least the first portion of the web page by the client device,
detecting from the feedback a changed condition indicating a deteriorated execution time affecting rendering performance of the at least the first portion of the web page by the client device (16), wherein the deteriorated execution time is independent of bandwidth in the edge network available to the client device,
the processor circuit further configured for dynamically optimizing the web page based on changing at least the first portion of the web page into an optimized web page in response to the changed condition detected from the feedback, for optimized rendering of the web page by the client device.

10. The apparatus of claim 9, arranged to perform a method according to any of claims 2 to 8.

11. Logic encoded in one or more non-transitory tangible media that when executed by a machine makes it perform a method according to any of claims 1 to 8.

## Patentansprüche

1. Verfahren, das Folgendes beinhaltet:
Empfangen, von einem Edge-Gerät (10) in einem Edge-Netzwerk (12), einer Anforderung (14) von einem Client-Gerät (16) für eine von einem Webserver (20) über ein Weitverkehrsnetz bereitgestellte Webseite (18), wobei das Edge-Netzwerk eine Zugangsnetzwerkverbindung für das Client-Gerät bereitstellt, um das Weitverkehrsnetz zu erreichen;
Empfangen, durch das Edge-Gerät, der Webseite über das Weitverkehrsnetz und das Edge-Netzwerk;
Einfügen, durch das Edge-Gerät in die Webseite vor dem Übertragen zum Client-Gerät, von ausführbarem Code zum Erhalten von Feedback zum Messen einer Darstellungsleistung von wenigstens einem ersten Teil der Webseite durch das Client-Gerät;
Empfangen, durch das Edge-Gerät, des Feedbacks von dem Client-Gerät, das die Rendering-Leistung von wenigstens dem ersten Teil der Webseite durch das Client-Gerät misst;
Erkennen, durch das Edge-Gerät von dem Feedback, eines geänderten Zustands, der eine verschlechterte Ausführungszeit anzeigt, die die Darstellungsleistung des wenigstens ersten Teils der Webseite durch das Client-Gerät beeinflusst, wobei die verschlechterte Ausführungszeit von der dem Client-Gerät verfügbaren Bandbreite in dem Edge-Netzwerk unabhängig ist; und
wobei das Edge-Gerät (10) dynamisch die Webseite auf der Basis der Änderung wenigstens des ersten Teils der Webseite in eine optimierte Webseite als Reaktion auf den vom Feedback erkannten geänderten Zustand optimiert, um die Darstellung der Webseite durch das Client-Gerät zu optimieren.

2. Verfahren nach Anspruch 1, wobei das dynamische Optimieren auf der Verbesserung der Darstellungsleistung mit der optimierten Darstellung basiert, wobei das Verfahren ferner das selektive Vermeiden von Optimierungsoperationen beinhaltet, die eine Verarbeitungsverzögerung einführen, die die Darstellungsleistung der Webseite durch das Client-Gerät (16) übersteigt.

3. Verfahren nach Anspruch 1, wobei der geänderte Zustand die Darstellungsleistung verschlechtert und wenigstens eines aus einer erkannten Netzwerkverbindungsqualität, assoziiert mit dem Edge-Netzwerk (12) und wenigstens einem aus dem Webserver (20) und dem Client-Gerät (16), einem erkannten Client-Gerätetyp und einer erkannten Client-Geräte-Darstellungsleistung beinhaltet.

4. Verfahren nach Anspruch 1, wobei der geänderte Zustand einen ersten Verbindungstyp, der eine erkannte Netzwerkverbindungsqualität reduziert und die Darstellungsleistung verschlechtert, oder einen zweiten Verbindungstyp beinhaltet, der die erkannte Netzwerkverbindungsqualität verbessert und die Darstellungsleistung verbessert.

5. Verfahren nach Anspruch 4, wobei das dynamische Optimieren das Optimieren der Webseite zum Verbessern der Darstellungsleistung als Reaktion auf die Erkennung des ersten Netzwerktyps oder das Optimieren der Webseite zum Bereitstellen von verbesserten Webseitenelementen als Reaktion auf die Erkennung des zweiten Verbindungstyps beinhaltet.

6. Verfahren nach Anspruch 1, wobei das dynamische Optimieren wenigstens eines der Folgenden beinhaltet:
Kombinieren von mehreren von der Webseite benötigten Formatvorlagen zu einer einzigen Formatvorlagedatei und Übertragen der einzelnen Formatvorlagedatei anstatt der mehreren Formatvorlagen zu dem Client-Gerät (16);
Kombinieren von mehreren von der Webseite benötigten Formatvorlagebildern zu einem einzigen Bild und Übertragen des einzigen Bildes anstatt der mehreren Formatvorlagebilder zu dem Client-Gerät;
Zuordnen eines Ablauf-Headers zu einem oder mehreren eingebetteten Objekten in der Webseite, um Anforderungen für die eingebetteten Objekte durch das Client-Gerät zu reduzieren; oder
Reduzieren der Größe von Webobjekten in der Webseite.

7. Verfahren nach Anspruch 6, wobei das dynamische Optimieren das Verlagern von Webelementen von der Webseite in eine Datei beinhaltet, die sich von der optimierten Webseite unterscheidet, wobei die optimierte Webseite die verlagerten Webelemente nicht enthält und erfordert, dass das Client-Gerät (16) auf die Datei zum Darstellen der optimierten Webseite zugreift.

8. Verfahren nach Anspruch 1, wobei das dynamische Optimieren das dynamische Optimieren einer lokal gecachten Kopie der Webseite beinhaltet, die vom Webserver (20) durch ein zweites Client-Gerät (16) über das Edge-Gerät (10) angefordert wurde.

9. Vorrichtung, die Folgendes umfasst:
eine Netzwerkschnittstellenschaltung, konfiguriert zum Empfangen einer Anforderung von einem Client-Gerät, wobei die Anforderung für eine von einem Webserver (20) über ein Weitverkehrsnetz bereitgestellte Webseite ist, wobei die Vorrichtung so konfiguriert ist, dass sie dem Client-Gerät Zugang zu dem Weitverkehrsnetz über ein Edge-Netzwerk (12) bereitstellt, das eine Zugangsnetzwerkverbindung für das Client-Gerät bereitstellt, um das Weitverkehrsnetz zu erreichen, wobei die Netzwerkschnittstellenschaltung ferner zum Empfangen der Webseite über das Weitverkehrsnetz und das Edge-Netzwerk konfiguriert ist; und
eine Prozessorschaltung, konfiguriert zum:
Einfügen, in die Webseite vor dem Übertragen zum Client-Gerät, von ausführbarem Code zum Erhalten von Feedback zum Messen einer Darstellungsleistung von wenigstens einem ersten Teil der Webseite durch das Client-Gerät,
Empfangen des Feedbacks von dem Client-Gerät, das die Darstellungsleistung wenigstens des ersten Teils der Webseite durch das Client-Gerät misst,
Erkennen, anhand des Feedbacks, eines geänderten Zustands, der eine verschlechterte Ausführungszeit anzeigt, die die Darstellungsleistung wenigstens des ersten Teils der Webseite durch das Client-Gerät (16) beeinflusst, wobei die verschlechterte Ausführungszeit von dem Client-Gerät verfügbarer Bandbreite in dem Edge-Netzwerk unabhängig ist,
wobei die Prozessorschaltung ferner zum dynamischen Optimieren der Webseite auf der Basis der Änderung wenigstens des ersten Teils der Webseite zu einer optimierten Webseite als Reaktion auf den von dem Feedback erkannten geänderten Zustand konfiguriert ist, um die Darstellung der Webseite durch das Client-Gerät zu optimieren.

10. Verfahren nach Anspruch 9, ausgelegt zum Durchführen eines Verfahrens nach einem der Ansprüche 2 bis 8 .

11. Logik, die in einem oder mehreren nichtflüchtigen fassbaren Medien encodiert ist, die bei Ausführung durch eine Maschine bewirken, dass diese ein Verfahren nach einem der Ansprüche 1 bis 8 durchführt.

## Revendications

1. Procédé, comprenant de :
recevoir, par un dispositif périphérique (10) d'un réseau de périphérie (12), une demande (14) à partir d'un dispositif client (16) pour une page Web (18) fournie par un serveur Web (20) via un réseau étendu, le réseau de périphérie fournissant une connexion de réseau d'accès permettant au dispositif client d'atteindre le réseau étendu;
recevoir, par le dispositif périphérique, la page Web via le réseau étendu et le réseau de périphérie;
insérer, par le dispositif périphérique dans la page Web avant le transfert vers le dispositif client, un code exécutable pour obtenir un retour d'informations mesurant des performances de rendu d'au moins une première partie de la page Web par le dispositif client;
recevoir, par le dispositif périphérique, le retour d'informations à partir du dispositif client qui mesure les performances de rendu d'au moins la première partie de la page Web par le dispositif client;
détecter, par le dispositif périphérique à partir du retour d'informations, une condition modifiée indiquant un temps d'exécution détérioré affectant les performances de rendu d'au moins la première partie de la page Web par le dispositif client, dans lequel le temps d'exécution détérioré est indépendant de la bande passante dans le réseau de périphérie disponible pour le dispositif client; et
le dispositif périphérique (10) optimisant de manière dynamique la page Web sur la base de la modification d'au moins la première partie de la page Web en une page Web optimisée en réponse à la condition modifiée détectée à partir du retour d'informations, pour un rendu optimisé de la page Web par le dispositif client.

2. Procédé selon la revendication 1, dans lequel l'optimisation dynamique est basée sur l'amélioration des performances de rendu en utilisant le rendu optimisé, le procédé comprenant en outre d'éviter sélectivement des opérations d'optimisation qui introduisent un retard de traitement dépassant les performances de rendu de la page Web par le dispositif client (16).

3. Procédé selon la revendication 1, dans lequel la condition modifiée dégrade les performances de rendu et inclut au moins l'un quelconque parmi une qualité de connexion réseau détectée associée au réseau de périphérie (12) et au moins l'un du serveur Web (20) ou du dispositif client (16), un type de dispositif client détecté, ou une performance de rendu de dispositif client détectée.

4. Procédé selon la revendication 1, dans lequel la condition modifiée comprend l'un d'un premier type de connexion qui réduit une qualité de connexion de réseau détectée et dégrade les performances de rendu, ou un second type de connexion qui améliore la qualité de connexion de réseau détectée et améliore les performances de rendu.

5. Procédé selon la revendication 4, dans lequel l'optimisation dynamique comprend l'un parmi l'optimisation de la page Web pour améliorer les performances de rendu en réponse à la détection du premier type de connexion, ou l'optimisation de la page Web pour fournir des éléments de page Web améliorés en réponse à la détection du second type de connexion.

6. Procédé selon la revendication 1, dans lequel l'optimisation dynamique comprend au moins l'un parmi :
combiner de multiples feuilles de style requises par la page Web en un fichier de feuilles de style unique, et transmettre le fichier de feuilles de style unique à la place des multiples feuilles de style au dispositif client (16);
combiner de multiples images de feuilles de style requises par la page Web en une seule image, et transmettre l'image unique à la place des multiples images de feuilles de style au dispositif client;
attribuer un en-tête d'expiration à un ou plusieurs objets intégrés dans la page Web afin de réduire des demandes pour les objets intégrés par le dispositif client; ou
réduire la taille d'objets Web dans la page Web.

7. Procédé selon la revendication 6, dans lequel l'optimisation dynamique comprend le déplacement d'éléments Web de la page Web dans un fichier distinct de la page Web optimisée, la page Web optimisée ne contenant pas les éléments Web déplacés et nécessitant que le dispositif client (16) accède au fichier pour le rendu de la page Web optimisée.

8. Procédé selon la revendication 1, dans lequel l'optimisation dynamique comprend l'optimisation dynamique d'une copie mise en cache localement de la page Web qui a été demandée au serveur Web (20) par un second dispositif client (16) via le dispositif périphérique (10).

9. Appareil comprenant :
un circuit d'interface de réseau configuré pour recevoir une demande à partir d'un dispositif client, la demande concernant une page Web fournie par un serveur Web (20) via un réseau étendu, l'appareil étant configuré pour fournir un accès au dispositif client vers le réseau étendu via un réseau de périphérie (12) fournissant une connexion de réseau d'accès permettant au dispositif client d'atteindre le réseau étendu, le circuit d'interface de réseau étant en outre configuré pour recevoir la page Web via le réseau étendu et le réseau de périphérie; et
un circuit de traitement configuré pour :
insérer, dans la page Web avant le transfert vers le dispositif client, un code exécutable pour obtenir un retour d'informations mesurant des performances de rendu d'au moins une première partie de la page Web par le dispositif client,
recevoir le retour d'informations à partir du dispositif client qui mesure les performances de rendu d'au moins la première partie de la page Web par le dispositif client,
détecter, à partir du retour d'informations, une condition modifiée indiquant un temps d'exécution détérioré affectant les performances de rendu d'au moins la première partie de la page Web par le dispositif client (16), dans lequel le temps d'exécution détérioré est indépendant de la bande passante dans le réseau périphérique disponible pour le dispositif client,
le circuit de traitement étant en outre configuré pour optimiser de manière dynamique la page Web sur la base de la modification d'au moins la première partie de la page Web en une page Web optimisée en réponse à la condition modifiée détectée à partir du retour d'informations, pour un rendu optimisé de la page Web par le dispositif client.

10. Appareil selon la revendication 9, agencé pour exécuter un procédé selon l'une quelconque des revendications 2 à 8.

11. Logique codée sur un ou plusieurs supports tangibles non transitoires qui, lorsqu'elle est exécutée par une machine, lui permet d'exécuter un procédé selon l'une quelconque des revendications 1 à 8.
